# EUROPÄISCHE PATENTSCHRIFT

(11) **EP 0 717 167 B1**
(45) Veröffentlichungstag und Bekanntmachung des Hinweises auf die Patenterteilung: **27.03.2002**
(21) Anmeldenummer: 95119194.9
(22) Anmeldetag: 06.12.1995
(51) Int. Cl.: E21B 37/06

(54) **Verwendung von Glycin-N,N-diessigsäure-Derivaten als Komplexbildner für Erdalkali- und Schwermetallionen bei der Förderung und beim Transport von Erdöl und Erdgas**
Utilisation of derivatives of glycin-N,N-diacetic acid as complexing agents for earthalkali and heavy metal ions during the recuperation and transportation of oil and gas
Utilisation de dérivés de glycine-N,N-diacétique comme agent complexant de métaux alcalins terreux et de métaux lourds pendant la récupération et le transport d'huile et de gaz

(30) Priorität: 14.12.1994 DE 4444347
(43) Veröffentlichungstag der Anmeldung: 19.06.1996
(73) Patentinhaber: Baker Hughes Limited, London W1R 6JE (GB)
(72) Erfinder: Greindl, Thomas, Dr., D-67098 Bad Dürkheim (DE); Slotman, Wilhelmus, D-67063 Ludwigshafen (DE)
(74) Vertreter: Holmes, Matthew Peter

(56) Entgegenhaltungen:
- DE-A- 4 319 935
- US-A- 4 860 829
- US-A- 5 481 018

## Beschreibung

Die vorliegende Erfindung betrifft die Verwendung von Glycin-N,N-diessigsäure-Derivaten und ihren Alkalimetall-, Erdalkalimetall-, Ammonium- und substituierten Ammoniumsalzen als Komplexbildner für Erdalkali- und Schwermetallionen bei der Förderung und beim Transport von Erdöl und Erdgas.

Als Komplexbildner für Erdalkali- und Schwermetallionen auf den verschiedensten technischen Gebieten mit ihren teilweise stark voneinander abweichenden Anforderungs- und Problemfeldern werden üblicherweise immer noch altbekannte und bewährte Systeme wie Polyphosphate, Nitrilotriessigsäure oder Ethylendiamintetraessigsäure eingesetzt. Diese Mittel zeigen allerdings gewisse Nachteile, prinzipielle Schwachpunkte sind insbesondere ihr noch verbesserungsbedürftiges Calcium- und Mangan-Bindevermögen, ihre noch nicht optimale stabilisierende Wirkung in Bleichbädern und Bleichsystemen sowie ihre meist unzureichende biologische Abbaubarkeit bzw. Eliminierbarkeit.

So wird auch bei der Erdöl- und Erdgasproduktion die Verwendung von Ethylendiamintetraessigsäure oder Nitrilotriessigsäure als Komplexbildner empfohlen, beispielsweise in der EP-A 224 346, welche jedoch bei dieser Anwendung Nachteile, insbesondere in ihrer Wirksamkeit und in ihrem Umweltverhalten, aufweisen.

Aus der nachveröffentlichten deutschen Patentanmeldung P 43 19 935.6 ist die Verwendung der hier beschriebenen Glycin-N,N-diessigsäure-Derivate als Komplexbildner für Erdalkali- und Schwermetallionen generell bekannt. Es werden die verschiedensten Anwendungen empfohlen, jedoch wird nicht erwähnt, daß sich diese Verbindungen auch als Hilfsmittel bei der Erdöl- und Erdgasproduktion eignen.

Aufgabe der vorliegenden Erfindung war es, ausreichend wirksame und gut biologisch abbaubare Komplexbildner für die Erdöl- und Erdgasproduktion zur Verfügung zu stellen.

Demgemäß wurde die Verwendung von Glycin-N,N-diessigsäure-Derivaten der allgemeinen Formel I 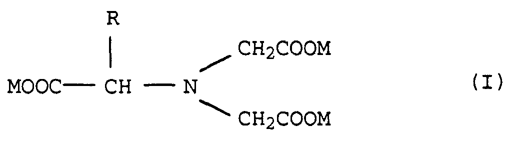 in der
- R: für C₁- bis C₃₀-Alkyl oder C₂- bis C₃₀-Alkenyl, welche zusätzlich als Substituenten bis zu 5 Hydroxylgruppen, Formylgruppen, C₁- bis C₄-Alkoxygruppen, Phenoxygruppen oder C₁-bis C₄-Alkoxycarbonylgruppen tragen und durch bis zu 5 nicht benachbarte Sauerstoffatome unterbrochen sein können, Alkoxylat-Gruppierungen der Formel ―(CH₂)ₖ―O―(A¹O)ₘ―(A²O)ₙ―Y, in der A¹ und A² unabhängig voneinander 1,2-Alkylengruppen mit 2 bis 4 C-Atomen bezeichnen, Y Wasserstoff, C₁- bis C₁₂-Alkyl, Phenyl oder C₁- bis C₄-Alkoxycarbonyl bedeutet und k für die Zahl 1, 2 oder 3 sowie m und n jeweils für Zahlen von 0 bis 50 stehen, wobei die Summe aus m + n mindestens 4 betragen muß, Phenylalkylgruppen mit 1 bis 20 C-Atomen im Alkyl, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert sein kann, tragende C₁- bis C₂₀-Alkylgruppen, wobei alle bei den Bedeutungen für R genannten Phenylkerne und heterocyclischen Ringe noch zusätzlich als Substituenten bis zu drei C₁- bis C₄-Alkylgruppen, Hydroxylgruppen, Carboxylgruppen, Sulfogruppen oder C₁- bis C₄-Alkoxycarbonylgruppen tragen können, oder einen Rest der Formel 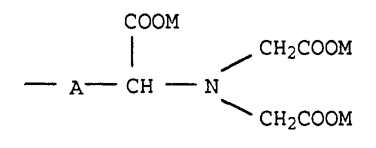 steht, wobei A eine C₁- bis C₁₂-Alkylen-Brücke, vorzugsweise eine C₂- bis C₁₂-Alkylen-Brücke, oder eine chemische Bindung bezeichnet, und
- M: Wasserstoff, Alkalimetall, Erdalkalimetall-, Ammonium oder substituiertes Ammonium in den entsprechenden stöchiometrischen Mengen bedeutet,
als Komplexbildner für Erdalkali- und Schwermetallionen bei der Förderung und beim Transport von Erdöl und Erdgas gefunden.

In einer bevorzugten Ausführungsform werden als Verbindungen I solche eingesetzt, bei denen R für C₁- bis C₂₀-Alkyl, C₂- bis C₂₀-Alkenyl oder einen Rest der Formel 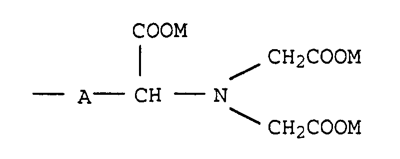 steht.

In einer besonders bevorzugten Ausführungsform werden als Verbindung I α-Alanin-N,N-diessigsäure (R=CH₃) und ihre Alkalimetall-, Ammonium- und substituierten Ammoniumsalze eingesetzt.

Als derartige Salze eignen sich vor allem die Natrium-, Kalium- und Ammoniumsalze, insbesondere das Trinatrium-, Trikalium- und Triammoniumsalz sowie organische Triaminsalze mit einem tertiären Stickstoffatom.

Als den organischen Aminsalzen zugrundeliegende Basen kommen insbesondere tertiäre Amine, wie Trialkylamine mit 1 bis 4 C-Atomen im Alkyl, wie Trimethyl- und Triethylamin, und Trialkanolamine mit 2 oder 3 C-Atomen im Alkanolrest, bevorzugt Triethanolamin, Tri-n-propanolamin oder Triisopropanolamin, in Betracht.

Als Erdalkalimetallsalze werden insbesondere die Calcium- und Magnesiumsalze eingesetzt.

Neben Methyl kommen für den Rest R als geradkettige oder verzweigte Alk(en)ylreste vor allem C₂- bis C₁₇-Alkyl und -Alkenyl, hierbei insbesondere geradkettige, von gesättigten oder ungesättigten Fettsäuren abgeleitete Reste, in Betracht. Beispiele für einzelne Reste R sind: Ethyl, n-Propyl, iso-Propyl, n-Butyl, iso-Butyl, sec.-Butyl, tert.-Butyl, n-Pentyl, iso-Pentyl, tert.-Pentyl, Neopentyl, n-Hexyl, n-Heptyl, 3-Heptyl (abgeleitet von 2-Ethylhexansäure), n-Octyl, iso-Octyl (abgeleitet von iso-Nonansäure), n-Nonyl, n-Decyl, n-Undecyl, n-Dodecyl, iso-Dodecyl (abgeleitet von ios-Tridecansäure), n-Tridecyl, n-Tetradecyl, n-Pentadecyl, n-Hexadecyl, n-Heptadecyl, n-Octadecyl, n-Nonadecyl, n-Eicosyl und n-Heptadecenyl (abgeleitet von Ölsäure). Es können für R auch Gemische auftreten, insbesondere solche, die sich von natürlich vorkommenden Fettsäuren und von synthetisch erzeugten technischen Säuren, beispielsweise durch Oxosynthese, ableiten.

Als C₁- bis C₁₂-Alkylen-Brücken A dienen vor allem Polymethylengruppierungen der Formel ―(CH₂)ₖ―, worin k eine Zahl von 2 bis 12, insbesondere von 2 bis 8 bezeichnet, d. h. 1,2-Ethylen, 1,3-Propylen, 1,4-Butylen, Pentamethylen, Hexamethylen, Heptamethylen, Octamethylen, Nonamethylen, Decamethylen, Undecamethylen und Dodecamethylen. Hexamethylen, Octamethylen, 1,2-Ethylen und 1,4-Butylen werden hierbei besonders bevorzugt. Daneben können aber auch verzweigte C₁- bis C₁₂-Alkylengruppen auftreten, z. B. ―CH₂CH(CH₃)CH₂―, ―CH₂C(CH₃)₂CH₂―, ―CH₂CH(C₂H₅)― oder ―CH₂CH(CH₃)―.

Die C₁- bis C₃₀-Alkyl- und C₂- bis C₃₀-Alkenylgruppen können bis zu 5, insbesondere bis zu 3 zusätzliche Substituenten der genannten Art tragen und durch bis zu 5, insbesondere bis zu 3 nicht benachbarte Sauerstoffatome unterbrochen sein. Beispiele für solche substituierten Alk(en)ylgruppen sind ―CH₂OH, ―CH₂CH₂OH, ―CH₂CH₂-O-CH₃, ―CH₂CH₂―O―CH₂CH₂―O―CH₃, ―CH₂―O―CH₂CH₃, ―CH₂―O―CH₂CH₂―OH, ―CH₂―CHO, ―CH₂―OPh, ―CH₂-COOCH₃ oder ―CH₂CH₂―COOCH₃.

Als Alkoxylat-Gruppierungen kommen insbesondere solche in Betracht, bei denen m und n jeweils für Zahlen von 0 bis 30, vor allem von 0 bis 15 stehen. A¹ und A² bedeuten von Butylenoxid und vor allem von Propylenoxid und von Ethylenoxid abgeleitete Gruppen. Von besonderem Interesse sind reine Ethoxylate und reine Propoxylate, aber auch Ethylenoxid-Propylenoxid-Blockstrukturen können auftreten.

Als fünf- oder sechsgliedrige ungesättigte oder gesättigte heterocyclische Ringe mit bis zu drei Heteroatomen aus der Gruppe Stickstoff, Sauerstoff und Schwefel, welche zusätzlich benzanelliert und durch die bezeichneten Reste substituiert sein können, kommen in Betracht:

Tetrahydrofuran, Furan, Tetrahydrothiophen, Thiophen, 2,5-Dimethylthiophen, Pyrrolidin, Pyrrolin, Pyrrol, Isoxazol, Oxazol, Thiazol, Pyrazol, Imidazolin, Imidazol, 1,2,3-Triazolidin, 1,2,3- und 1,2,4-Triazol, 1,2,3- , 1,2,4- und 1,2,5-Oxadiazol, Tetrahydropyran, Dihydropyran, 2H- und 4H-Pyran, Piperidin, 1,3- und 1,4-Dioxan, Morpholin, Pyrazan, Pyridin, α-, β- und γ-Picolin, α- und γ-Piperidon, Pyrimidin, Pyridazin, Pyrazin, 1,2,5-Oxathiazin, 1,3,5-, 1,2,3- und 1,2,4-Triazin, Benzofuran, Thionaphthen, Indolin, Indol, Isoindolin, Benzoxazol, Indazol, Benzimidazol, Chroman, Isochroman, 2H- und 4H-Chromen, Chinolin, Isochinolin, 1,2,3,4-Tetrahydroisochinolin, Cinnolin, Chinazolin, Chinoxalin, Phthalazin und Benzo-1,2,3-triazin.

N-H-Gruppierungen in den genannten heterocyclischen Ringen sollten möglichst in derivatisierter Form, etwa als N-Alkyl-Gruppierung, vorliegen.

Bei Substitution an den Phenylkernen oder den heterocyclischen Ringen treten vorzugsweise zwei (gleiche oder verschiedene) oder insbesondere ein einzelner Substituent auf.

Beispiele für gegebenenfalls substituierte Phenylalkylgruppen und heterocyclische Ringe tragende Alkylgruppen für R sind Benzyl, 2-Phenylethyl, 3-Phenylpropyl, 4-Phenylbutyl, o-, m- oder p-Hydroxylbenzyl, o-, m- oder p-Carboxylbenzyl, o-, m- oder p-Sulfobenzyl, o-, m- oder p-Methoxy oder -Ethoxycarbonylbenzyl, 2-Furylmethyl, N-Methylpiperidin-4-ylmethyl oder 2-, 3- oder 4-Pyridinylmethyl.

Bei Substitution an Phenylkernen und auch an heterocyclischen Ringen treten bevorzugt wasserlöslich machende Gruppen wie Hydroxylgruppen, Carboxylgruppen oder Sulfogruppen auf.

Als Beispiele für die genannten C₁- bis C₄-, C₁- bis C₁₂- und C₁- bis C₂₀-Alkylgruppen sind auch die entsprechenden oben aufgeführten Reste für R zu verstehen.

Durch die erfindungsgemäße Verwendung der Verbindungen I werden hauptsächlich Ablagerungen von Erdalkalimetallcarbonaten und -sulfaten beseitigt, die oft bei der Erdöl- und Erdgasproduktion auftreten. Wird Phosphorsäure als Hilfsmittel mitverwendet, können auch auftretende Erdalkalimetallphosphat-Ablagerungen verhindert bzw. beseitigt werden. Die Ablagerungen können sich in der unterirdischen Erdöl- bzw. Erdgas-Formation, im Bohrloch oder in den oberirdischen Transportleitungen und Lagerbehältnissen bilden, solange Wasser zugegen ist.

Die Ablagerungen treten in Form von Salzausfällungen aus den wasserhaltigen Förderprodukten vor allem deshalb auf, weil sich bei der Produktion von Erdöl und Erdgas auf dem Weg von der Lagerstätte über das Bohrloch, die Leitungen und die Aufbereitungsanlagen die physikalischen Parameter der produzierten Flüssigkeiten wie Druck und Temperatur stark ändern.

Die Verbindungen I können auch in Verbindung mit üblichen Scaleinhibitoren, insbesondere solchen auf Basis von Polyacrylaten, Polymaleinsäureanhydrid, Phosphonaten und Phosphatestern, eingesetzt werden, wobei in vielen Fällen eine synergistische Wirkungsverstärkung bei der Entfernung von Ablagerungen eintreten kann.

In Erdöllagerstätten wird normalerweise Wasser eingepreßt, um eine bessere Entölung zu erhalten oder den Lagerstättendruck aufrecht zu halten bzw. zu erhöhen. Dieses eingepreßte Wasser kann zusammen mit dem vorhandenen Lagerstättenwasser zu Ausfällungen führen, wenn das eine gelöste Erdalkalimetallionen und das andere gelöste Sulfat-, Carbonat- und/oder Hydrogencarbonationen enthält. Die Ausfällungen führen dann zu Verstopfungen des porösen Gesteins und erschweren das Einpressen des Wassers und die Förderung des Erdöls bzw. Erdgases.

Bei Sonderbehandlungen zur Reinigung der Perforation und des Lagerstättengesteins oder zur teilweisen Auflösung des Lagerstättengesteins werden anorganische und/oder organische Säuren wie Flußsäure, Salzsäure, Ameisensäure oder Essigsäure eingesetzt. Die hieraus entstehenden wäßrigen Flüssigkeiten können oft Eisenionen enthalten, was zu Ausfällungen von ungelösten Eisenverbindungen führen kann. Auch solche Ausfällungen können durch die Verbindungen I verhindert bzw. beseitigt werden.

Der Vorteil der erfindungsgemäß verwendeten Verbindungen I liegt in der wirksameren Auflösung bzw. Wiederauflösungen von abgelagerten oder ausgefallenen Erdalkalimetallverbindungen und generell von unlöslichen Schwermetallverbindungen.

Weitere Vorteile der Verbindungen I sind ihr sehr geringes Toxizitätspotential und ihre gute biologische Abbaubarkeit. So zeigt α-Alanin-N,N-diessigsäure im Zahn-Wellens-Test unter Standardbedingungen eine biologische Abbaubarkeit > 90 % (28-Tage-Wert), wogegen beispielsweise Ethylendiamintetraessigsäure unter gleichen Bedingungen einen Wert von < 10 % ergibt.

## Patentansprüche

1. Verwendung von Glycin-N,N-diessigsäure-Derivaten der allgemeinen Formel I 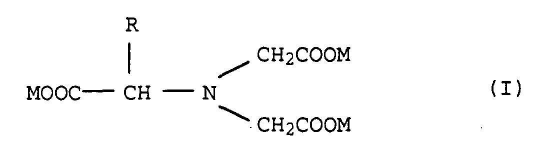 in der
R für C₁- bis C₃₀-Alkyl oder C₂- bis C₃₀-Alkenyl, welche zusätzlich als Substituenten bis zu 5 Hydroxylgruppen, Formylgruppen, C₁- bis C₄-Alkoxygruppen, Phenoxygruppen oder C₁- bis C₄-Alkoxycarbonylgruppen tragen und durch bis zu 5 nicht benachbarte Sauerstoffatome unterbrochen sein können, Alkoxylat-Gruppierungen der Formel ―(CH₂)ₖ―O―(A¹O)ₘ―(A²O)ₙ―Y, in der A¹ und A² unabhängig voneinander 1,2-Alkylengruppen mit 2 bis 4 C-Atomen bezeichnen, Y Wasserstoff, C₁- bis C₁₂-Alkyl, Phenyl oder C₁- bis C₄-Alkoxycarbonyl bedeutet und k für die Zahl 1, 2 oder 3 sowie m und n jeweils für Zahlen von 0 bis 50 stehen, wobei die Summe aus m + n mindestens 4 betragen muß, Phenylalkylgruppen mit 1 bis 20 C-Atomen im Alkyl, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert sein kann, tragende C₁- bis C₂₀-Alkylgruppen, wobei alle bei den Bedeutungen für R genannten Phenylkerne und heterocyclischen Ringe noch zusätzlich als Substituenten bis zu drei C₁- bis C₄-Alkylgruppen, Hydroxylgruppen, Carboxylgruppen, Sulfogruppen oder C₁- bis C₄-Alkoxycarbonylgruppen tragen können, oder einen Rest der Formel 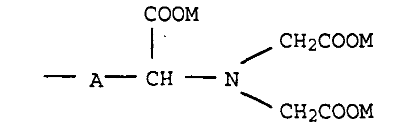 steht, wobei A eine C₁- bis C₁₂-Alkylen-Brücke oder eine chemische Bindung bezeichnet, und
M Wasserstoff, Alkalimetall, Erdalkalimetall-, Ammonium oder substituiertes Ammonium in den entsprechenden stöchiometrischen Mengen bedeutet,
als Komplexbildner für Erdalkali- und Schwermetallionen bei der Förderung und beim Transport von Erdöl und Erdgas.

2. Verwendung con Glycin-N,N-diessigsäure-Derivaten I, bei denen R für C₁- bis C₂₀-Alkyl, C₂- bis C₂₀-Alkenyl oder einen Rest der Formel 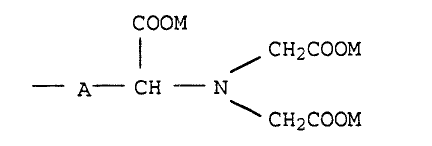 steht, nach Anspruch 1.

3. Verwendung von α-Alanin-N,N-diessigsäure und ihren Alkalimetall-, Ammonium- und substituierten Ammoniumsalze nach Anspruch 1 oder 2.

## Claims

1. Use of glycine-N,N-diacetic acid derivatives having the general formula I 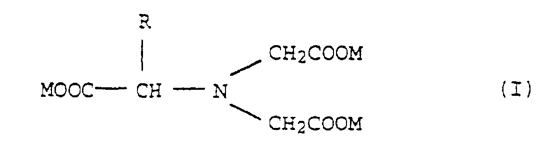 in which
R represents a C₁-C₃₀ alkyl or a C₂-C₃₀ alkenyl, which may additionally bear as substituents up to hydroxyl groups, formyl groups, C₁-C₄ alkoxy groups, phenoxy groups or C₁-C₄ alkoxycarbonyl groups and may be interrupted by up to 5 non-adjacent oxygen atoms, alkoxylate groups having the formula ―(CH₂)ₖ―O―(A¹O)ₘ―(A²O)ₙ― Y, in which A¹ and A² mutually independently represent 1,2-alkylene groups having 2 to 4 C atoms, Y represents a hydrogen, a C₁-C₁₂ alkyl, a phenyl or a C₁-C₄ alkoxycarbonyl and k is the number 1, 2 or 3 and m and n each are numbers from 0 to 50, wherein the sum of m + n must be at least 4, phenylalkyl groups having 1 to 20 C atoms in the alkyl, C₁-C₂₀ alkyl groups bearing a five- or six-membered unsaturated or saturated heterocyclic ring having up to three heteroatoms from the group of nitrogen, oxygen and sulfur, which ring may additionally be benzo-fused, wherein all the phenyl nuclei and heterocyclic rings mentioned when denoting R may also additionally bear as substituents up to three C₁-C₄ alkyl groups, hydroxyl groups, carboxyl groups, sulfo groups or C₁-C₄ alkoxycarbonyl groups, or a residue of the formula 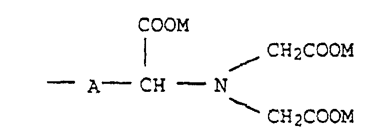 wherein A represents a C₁-C₁₂ alkylene bridge or a chemical bond, and
M represents a hydrogen, an alkali metal, an alkaline earth metal, an ammonium or a substituted ammonium in the appropriate stoichiometric quantities,
as complexing agents for alkaline earth ions and heavy metal ions in the extraction and transport of petroleum and natural gas.

2. Use of glycine-N,N-diacetic acid derivatives I, in which R represents a C₁-C₂₀ alkyl, a C₂-C₂₀ alkenyl or a residue having the formula 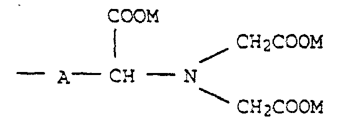 according to claim 1.

3. Use of α-alanine-N,N-diacetic acid and the alkali metal, ammonium and substituted ammonium salts thereof according to claim 1 or 2.

## Revendications

1. Utilisation de dérivés de l'acide glycine-N,N-diacétique de la formule générale I 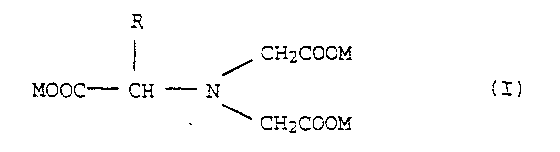 dans laquelle
R est un alkyle en C₁-C₃₀ ou un alcényle en C₂-C₃₀, qui peuvent porter comme substituants supplémentaires jusqu'à 5 groupes hydroxyles, formyles, alcoxy en C₁-C₄, phénoxy ou alcoxycarbonyle en C₁-C₄ et qui peuvent être interrompus par jusqu'à 5 atomes d'oxygène non voisins, des groupes alcoxylates de formule -(CH₂)ₖ-O-(A¹O)ₘ-(A²O)ₙ-Y, dans laquelle A¹ et A² désignent indépendamment l'un de l'autre des groupes 1,2-alkylènes avec 2 à 4 atomes de C, Y est un hydrogène, un alkyle en C₁-C₁₂, un phényle ou un alcoxycarbonyle en C₁-C₄, et k est égal au nombre 1, 2 ou 3, et m et n représentent chacun un nombre de 0 à 50, la somme de m + n étant au moins égale à 4, des groupes phénylalkyles avec 1 à 20 atomes de C dans l'alkyle, des groupes alkyles en C₁-C₂₀ portant un anneau hétérocyclique saturé ou insaturé à cinq ou six membres avec jusqu'à 3 hétéroatomes du groupe azote, oxygène et soufre, qui peut en plus être un noyau benzénique condensé, tous les noyaux phényliques et les anneaux hétérocycliques mentionnés en désignant R pouvant en plus porter comme substituants jusqu'à trois groupes alkyles en C₁-C₄, groupes hydroxyles, groupes carboxyles, groupes sulfoniques ou groupes alcoxycarbonyles en C₁-C₄, ou est un résidu de la formule 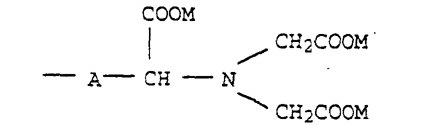
dans laquelle A désigne un pont alkylène en C₁-C₁₂ ou une liaison chimique, et
M représente un hydrogène, un métal alcalin, un métal alcalino-terreux, un ammonium ou un ammonium substitué dans les quantités stoechiométriques correspondantes,
en tant qu'agent complexant pour ions de métaux alcalino-terreux et de métaux lourds lors de l'extraction et du transport de pétrole et de gaz naturel.

2. Utilisation de dérivés de l'acide glycine-N,N-diacétique I, dans lesquels R représente un alkyle en C₁-C₂₀, un alcényle en C₂-C₂₀ ou un résidu de la formule 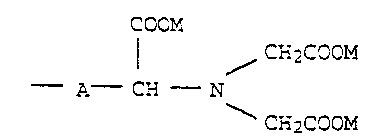 selon la revendication 1.

3. Utilisation de l'acide α-alanine-N,N-diacétique et de ses sels de métaux alcalins, d'ammonium et d'ammonium substitué selon la revendication 1 ou 2.
